# FASCICULE DE BREVET EUROPEEN

(11) **EP 2 871 956 B1**
(45) Date de publication et mention de la délivrance du brevet: **11.03.2020**
(21) Numéro de dépôt: 13735265.4
(22) Date de dépôt: 10.07.2013
(51) Int. Cl.: A01N 37/10

(54) **UTILISATION DE L'ACIDE 4-PHÉNYLBUTYRIQUE POUR AMÉLIORER LA TOLÉRANCE DES PLANTES AUX BIOAGRESSEURS**
VERWENDUNG VON 4-PHENYLBUTTERSÄURE ZUR VERBESSERUNG DER TOLERANZ VON PFLANZEN GEGENÜBER SCHÄDLICHEN BIOLOGISCHEN ORGANISMEN
USE OF 4-PHENYLBUTYRIC ACID FOR IMPROVING THE TOLERANCE OF PLANTS TO HARMFUL BIOLOGICAL ORGANISMS

(30) Priorité: 11.07.2012 FR 1256660
(43) Date de publication de la demande: 20.05.2015
(60) Demande divisionnaire: 20154293.3
(73) Titulaire: Institut De Recherche Pour Le Développement (IRD), 13002 Marseille 2 (FR)
(72) Inventeur: CACAS, Jean-Luc, F-21000 Dijon (FR); CHAMPION, Antony, F-30260 Quissac (FR)
(74) Mandataire: Plasseraud IP
(86) Numéro de dépôt international: PCT/EP2013/064547
(87) Numéro de publication internationale: WO 2014/009402

(56) Documents cités:
- WO-A2-2011/124554
- US-A1- 2010 261 694
- US-B1- 6 245 717

## Description

### Domaine de l'Invention

La présente invention concerne l'utilisation de l'acide 4-phénylbutyrique pour améliorer la résistance des plantes aux bioagresseurs, en particulier aux bactéries.

### Contexte de l'Invention

La lutte contre les maladies de plantes est une préoccupation majeure de l'agriculture. On estime qu'au niveau mondial environ un tiers des récoltes est détruit au champ ou lors du stockage par des agents pathogènes (insectes, virus, bactéries, oomycètes ou champignons). Cela se traduit par des pertes économiques considérables et, peut, dans certaines régions du globe, conduire à des problèmes de sous-alimentation ou de malnutrition des populations.

Au fil du temps, plusieurs approches ont été développées pour lutter contre les maladies des plantes, la plus ancienne étant l'approche chimique qui fait appel aux pesticides, tels que les fongicides, bactéricides, nématocides, virucides et insecticides. Bien qu'efficace, l'utilisation de molécules issues de l'industrie chimique est généralement associée à des problèmes de pollution et à des risques potentiels pour la santé humaine et animale. De plus, de nombreux phytopathogènes d'origine virale ou bactérienne ne sont pas sensibles aux produits chimiques actuellement disponibles sur le marché, et certains champignons pathogènes, acariens, nématodes et insectes peuvent supporter sans dommage de fortes doses de pesticides.

Des alternatives aux traitements chimiques ont, depuis, été mises au point et sont couramment utilisées au champ ou arrivent peu à peu sur le marché. Il faut citer, en particulier, la lutte biologique qui emploie des organismes prédateurs naturels contre les agents pathogènes de plantes; l'amélioration génétique des plantes qui demeure l'une des méthodes de choix lorsqu'on a identifié des gènes de résistance ou de tolérance stables qui peuvent être introduits dans le matériel héréditaire des plantes; et les méthodes fondées sur la résistance naturelle des plantes aux maladies provoquées par les ravageurs.

La résistance naturelle des plantes aux maladies provoquées par les ravageurs est souvent initiée par la reconnaissance spécifique d'un pathogène donné, et particulièrement par la reconnaissance de molécules appelées "éliciteurs" ou "effecteurs" présentes à la surface des pathogènes ou excrétées par ceux-ci. Cette reconnaissance conduit à une induction rapide des mécanismes de défense de la plante qui limitent la multiplication et la propagation du pathogène dans les différents tissus végétaux. Des travaux ont montré que l'application d'éliciteurs sur une plante augmente la résistance de celle-ci aux bioagresseurs en activant préventivement ses réactions de défense. Cette stimulation des défenses naturelles a ouvert la voie à de nouvelles approches en matière de lutte contre les maladies des plantes et suscite de plus en plus d'intérêt. Cependant, les éliciteurs présentent le désavantage d'avoir un spectre d'action limité et un coût encore trop élevé.

La majorité des méthodes déjà existantes basées sur l'exploitation des mécanismes de défenses naturelles des plantes repose sur l'activation de la mort cellulaire hypersensible dans des contextes où la plante ne le fait pas normalement. Bien que ces méthodes conduisent indubitablement à la résistance, elles ont pour conséquence d'entraîner la mort les tissus infectés. Même si cette mort se fait au bénéfice du reste de la plante, il en résulte une perte de rendement.

Malgré les progrès réalisés, il existe donc toujours un besoin de nouvelles stratégies de lutte contre les maladies de plantes causées par des agents pathogènes.

### Résumé de l'Invention

D'une façon générale, la présente invention repose sur l'utilisation de l'acide 4-phénylbutyrique (4-PBA) dans le domaine de l'agriculture. Les inventeurs ont en effet montré que le 4-PBA inhibe la mort cellulaire hypersensible induite par les agents phytopathogènes et que l'application de 4-PBA aux plantes permet d'améliorer leur résistance à ces agents sans affecter le rendement des plantes. Les inventeurs ont également démontré qu'en plus de ses effets sur les plantes, le 4-PBA présente des propriétés antimicrobiennes envers les agents phytopathogènes. Comparé aux principes actifs chimiques actuellement disponibles sur le marché, le 4-PBA a l'avantage de n'être toxique ni pour l'homme ni pour l'environnement aux doses utilisées, y compris pour les plantes auxquelles il est administré. De plus, il est relativement peu coûteux.

En conséquence, la présente invention concerne une méthode de destruction d'un phytopathogène et/ou d'inhibition de la croissance d'un phytopathogène pour la prévention ou le traitement d'une maladie végétale causée par ledit phytopathogène, comprenant l'application, à la plante ou au sol environnant la plante, d'une quantité suffisante de 4-PBA, ou de l'un de ses sels, caractérisée en ce que le phytopathogène est choisi parmi les bactéries.

Dans certains modes de réalisation, le phytopathogène est préférablement biotrophe.

Dans certains modes de réalisation, la méthode selon l'invention est caractérisée en ce que le 4-PBA, ou l'un de ses sels, est appliqué pré-émergence de la plante.

Alternativement ou additionnellement, le 4-PBA, ou l'un de ses sels, peut être appliqué post-émergence de la plante.

Dans certains modes de réalisation, le 4-PBA, ou l'un de ses sels, est appliqué aux parties aériennes de la plante, aux racines de la plante, aux semences, tubercules ou bulbes de la plante, et/ou aux fruits ou grains de la plante.

Dans certains modes de réalisation, la méthode selon l'invention est caractérisée en ce que la plante appartient à la famille des Malvacées, à la famille des Solanacées, à la famille des Rubiacées, à la famille des Poacées ou Graminées ou à la famille des Vitacées.

Une description plus détaillée de certains modes de réalisation préférés de l'invention est donnée ci-dessous.

### Description Détaillée de l'Invention

Comme mentionné ci-dessus, est décrite ici l'utilisation de l'acide 4-phénylbutyrique (4-PBA) pour améliorer la résistance des plantes aux bioagresseurs sans affecter leur rendement. En particulier, le 4-PBA peut être utilisé pour améliorer la résistance des plantes aux bactéries ; pour inhiber la mort cellulaire hypersensible induite par ces phytopathogènes ; et/ou pour détruire ces phytopathogènes et/ou en limiter la croissance et la reproduction.

### I - L'acide 4-phénylbutyrique et ses Sels

L'acide 4-phénylbutyrique (également appelé acide 4-phénylbutanoïque) est une petite molécule qui, en raison de ses propriétés biologiques, a trouvé application dans le domaine de la pharmacie et dont l'utilisation dans le domaine de l'agriculture a récemment été proposée.

Le 4-PBA est une molécule chaperone, c'est-à-dire une molécule qui assiste les protéines dans leur maturation en leur assurant un repliement tridimensionnel adéquat (Cohen et al., Nature, 2003, 426 : 905-909). Plusieurs études ont montré que, chez les mammifères, le 4-PBA inhibe le stress du réticulum endoplasmique et abolit le déclenchement de l'UPR (Upfolded Protein Response). Le 4-PBA est approuvé pour le traitement des maladies du cycle de l'urée (Maestri et al., N. Engl. J. Med., 1996, 335 : 855-859), et a été proposé comme agent thérapeutique dans le traitement de pathologies comme le diabète de type 2 et les maladies neurodégénératives.

Chez les plantes, il a été reporté que l'application de 4-PBA aux cultures permet de contrôler la production d'auxine (une phytohormone de croissance végétale) et d'augmenter ainsi leurs rendements (Brevet US 6,245,717). L'application de 4-PBA aux plantes a également été décrite comme résultant en une amélioration de la résistance des plantes aux stress abiotiques, comme la sécheresse, la chaleur ou l'aridité (Demande US 2012/0077677). Enfin, il a été démontré qu'il est possible de prévenir la fusariose de l'épi, une maladie qui touche les cultures et qui est causée par un champignon nécrotrophe du genre *Fusarium*, par application de molécules chaperones, telles que le 4-PBA, aux cultures (Demande US 2010/0261694).

Dans le contexte de l'invention, le 4-PBA peut être utilisé sous forme d'acide 4-phénylbutyrique ou sous la forme d'un de ses sels. Par "sel de 4-PBA", on entend tout composé obtenu en faisant réagir le 4-PBA, faisant fonction d'acide, avec une base appropriée pour former, par exemple, un sel de métal alcalin, tel que le sodium, le potassium, et le lithium ; un sel de métal alcalino-terreux, tel que le calcium et le magnésium ; un sel d'un métal de transition, tel que le manganèse, le cuivre, le zinc et le fer ; un sel d'ammonium ; un sel de phosphonium ; un sel de sulfonium ; un sel d'oxonium ; un sel de choline ; ou encore un sel avec une base organique contenant un atome d'azote, telle que la triméthylamine, la triéthylamine, la tributylamine, la N,N-diméthylaniline, la N-méthylpipéridine, la N-méthylmorpholine, la diéthylamine, la dicyclohexylamine, la dibenzylamine, la pyridine, la guanidine, l'hydrazine et la quinine. Préférablement, un sel de 4-PBA utilisé dans la mise en œuvre de la présente invention est un sel de sodium, de potassium, de calcium, de magnésium, de manganèse, de cuivre, de zinc, de fer, d'ammonium, de phosphonium, de sulfonium, ou d'oxonium.

Le 4-PBA peut être synthétisé par n'importe quelle méthode, par exemple par réaction du benzène avec la butyrolactone en présence de chlorure d'aluminium suivie d'une neutralisation en présence de base comme décrit dans le brevet US 6,372,938.

Généralement, le 4-PBA, ou un de ses sels, est appliqué aux plantes sous forme de solution aqueuse. Il peut être utilisé seul ou en combinaison avec d'autres substances tels que, par exemple, des insecticides, des acaricides, des fongicides, des nématicides, des bactéricides, des herbicides, des phytoprotecteurs, des régulateurs de croissance, des compléments d'éléments nutritifs, et/ou des engrais.

### II - Utilisation de l'Acide 4-Phénylbutyrique pour Améliorer la Résistance des Plantes aux Phytopathogènes

Les présents inventeurs ont montré que le 4-PBA améliore la résistance des plantes aux agents phytopathogènes. Contrairement à la résistance naturelle des plantes qui repose sur l'activation de la mort cellulaire hypersensible et conduit à la mort des tissus infectés, la résistance résultant de l'application de 4-PBA s'effectue sans affecter le rendement des plantes. En effet, les inventeurs ont montré que le 4-PBA inhibe la mort cellulaire hypersensible induite par les phytopathogènes, et évite ainsi la mort des tissus infectés.

Par "résistance aux phytopathogènes", on entend désigner ici une série d'avantages pour les plantes. De tels avantages peuvent se manifester, par exemple, par une diminution de la prédisposition d'une plante à développer une maladie causée par un phytopathogène ; une amélioration de la faculté de la plante à lutter contre une maladie causée par un phytopathogène ; une diminution de la présence, dans la plante, du nombre et/ou de la gravité des symptômes d'une maladie par un phytopathogène ; une amélioration de la stabilité au stockage de la plante une fois récoltée (et/ou de ses fruits une fois cueillis) ; une amélioration de l'aspect de la plante due à l'absence ou à la présence d'un nombre limité de site de nécrose, de brûlure, de tâche, de pourriture, de galle, de tumeur, ou de flétrissure dans les tissues de la plante ; une amélioration de la biomasse ; une amélioration de la croissance des racines ; une amélioration de la production des stolons ; une augmentation de la surface des feuilles ; une amélioration de la reproduction sexuée et/ou végétative ; une augmentation du nombre des fleurs ; une augmentation du volume des fruits ; une amélioration de l'aspect des fruits ; une augmentation de la concentration des éléments nutritifs et des constituants comme, par exemple, les glucides ou carbohydrates, les lipides, les protéines, les vitamines, les minéraux, et les fibres ; une diminution du la quantité de produits toxiques ou défavorables contenus dans la plante, etc.

Dans ce qui précède, une amélioration, une augmentation, ou une diminution d'une propriété est généralement d'au moins 3%, préférablement d'au moins 5%, et plus préférablement encore d'au moins 10% par rapport à une plante qui n'a pas été traitée par le 4-PBA, ou l'un de ses sels.

Est donc décrite ici l'utilisation du 4-PBA, ou de l'un de ses sels, pour améliorer la résistance des plantes aux agents phytopathogènes.

Est également décrite ici l'utilisation du 4-PBA, ou de l'un de ses sels, pour la prévention d'une maladie végétale causée par un agent phytopathogène.

Est aussi décrite ici l'utilisation du 4-PBA, ou de l'un de ses sels, pour inhiber la mort cellulaire hypersensible induite, dans une plante, par un agent phytopathogène. Tel qu'utilisé ici, le terme "mort cellulaire hypersensible" désigne la mort des cellules végétales infectées par un pathogène, qui résulte de la réponse hypersensible (HR), une réaction de défense de la plante qui se met en place en réponse à une invasion par un agent pathogène.

### Agents Pathogènes

Par "agents phytopathogènes" ou "phytopathogènes", on entend désigner ici des microorganismes susceptibles d'infecter les végétaux et d'y déclencher des maladies. L'agent phytopathogène est une bactérie.

Préférablement, les agents phytopathogènes sont biotrophes, c'est-à-dire sont des microorganismes qui s'alimentent aux dépens de la plante.

Le 4-PBA peut être utilisé pour améliorer la résistance des plantes aux bactéries phytopathogènes. De telles bactéries phytopathogènes peuvent appartenir au groupe des α-protéobactéries, qui contient les bactéries du genre *Bacterium* (qui au contact d'une blessure, peuvent provoquer chez quasiment toutes les dicotylédones, des galles ou quelquefois la prolifération de racines) et les bactéries du genre *Rhizobium* (qui vivent en symbiose avec les racines de légumineuses) ; ou au groupe des β-protéobactéries, qui contient les bactéries du genre *Burkholdéria* (qui provoquent des flétrissements, des pourritures ou des nécroses) et les bactéries du genre *Ralstonia solanacerum* (qui sont responsables de maladies vasculaires dans les régions tropicales) ; ou encore au groupe des γ-protéobactéries, qui contient les bactéries du genre *Erwinia* (qui sont responsables d'importantes maladies de plantes).

Le 4-PBA peut en particulier être utilisé pour améliorer la résistance des plantes aux bactéries du genre *Xanthomonas,* notamment les espèces *X. campestris, X. albilineans, X alfalfae, X. ampelina, X. arboricola, X. axonopodis, X. boreopolis, X. badnii, X. bromi, X. cassavae, X. citri* , *X. codiaei, X. cucurbitae, X. cyanopsidis, X. cynarae, X. euvesicatoria, X. fragariae, X. hortorum, X. hyacinthi, X. malvacearum, X. manihotis, X. melonis, X. oryzae, X. papavericola, X. perforans, X. phaseoli, X. pisi, X. populi, X. sacchari, X. theicola, X. translucens, X. vasicola,* et *X. vesicatoria.*

Les bactéries de l'espèce *Xanthomonas campestris* peuvent en particulier appartenir aux pathovars *armoraciae, begoniae A, begoniae B, campestris, carotae, corylina, dieffenbachiae, hederae, hyacinthi, juglandis, malvacearum, musacearum, nigromaculans, pelargonii, phaseoli, poinsettiicola, raphani, sesami, tardicrescens, translucens* et *vesicatoria,* qui s'attaquent à de nombreuses espèces végétales d'intérêt agronomique comme le riz, le chou, le haricot, les fruits de type agrume comme le citron, la canne à sucre, etc.

Le 4-PBA peut aussi être utilisé pour améliorer la résistance des plantes aux bactéries du genre *Pseudomonas,* notamment les espèces *P. syringae, P. amygdali, P. avellanae, P. agarici, P. alcaligenes, P. asplenii, P. aurantiaca, P. aureofaciens, P. balearica, P. brassicacearum, P. cannabina, P. caricapapayae, P. cichorii, P. coronafaciens, P. cedrina, P. chlororaphis, P. corrugata, P. cissicola, P. citronellolis, P. congelans, P. costantinii P. gengiri, P. extremorientalis, P. ficuserectae, P. flavescens, P. flectens, P. fluorescens, P. fuscovaginae, P. gessardii P. grimontii P. jessenii, P. kilonensis, P. lanceolata, P. libanensis, P. helianthi, P. lini, P. lundensis, P. meliae, P. reactans, P. resinovorans, P. rhodesiae, P. savastanoi, P. saccharophila, P. mediterranea, P. marginalis, P. mandelii, P. salomonii, P. putida, P. tolaasii, P.trivialis, P. tremae, P.veronii* et *P. viridiflava.*

Les bactéries de l'espèce *Pseudomonas syringae* peuvent en particulier appartenir aux pathovars *aceris, aptata, apii, antirrhini, avii, atrofaciens, atropurpurea, dysoxylis, japonica, lapsa, panici, papulans, pisi, syringae, aesculi, actinidiae, nigromaculans, pelargonii, glycenea, maculicola, passiflorae, persicae, phaseoli, poinsettiicola, raphani, sesami, spinaceae, tabaci, tardicrescens, theae, tomato, translucens* et *vesicatoria,* qui s'attaquent à de nombreuses plantes d'intérêt agronomique dont la tomate, le soja, le tabac, le haricot, le citronnier, le poirier, le pois, le cerisier, etc... Le 4-PBA, ou l'un de ses sels, peut notamment être utilisé pour améliorer la résistance d'une plante à la bactérie *Pseudomonas solanacearum*, également appelée *Ralstonia solanacearum* ou *Burkholderia solanacearum*, qui est présente dans tous les continents, particulièrement dans les régions tropicales et subtropicales. Cette bactérie est notamment l'agent de la pourriture brune de la pomme de terre, de la maladie de Granville du tabac et de la maladie de Moko du bananier.

Le 4-PBA peut aussi être utilisé pour améliorer la résistance des plantes aux bactéries du genre *Erwinia*, notamment les espèces *E. amylovora* qui provoque le feu bactérien chez le poirier et le pommier, *E. carotovora* qui est pathogène de nombreux fruits et légumes (carotte, betterave, navet, tomate, pomme de terre...), *E. aphidicola, E. billingiae, E. chrysanthemi, E. mallotivora, E. papayae, E. persicina, E. psidii, E. pyrifoliae, E. rhapontici, E. tasmaniensis, E. toletana,* et *E. racheiphila.* Le 4-PBA, ou un de ses sels, peut en particulier être utilisé pour améliorer la résistance d'une plante à la bactérie *E. chrysanthemi* également appelée *Dickeyq dadantii,* qui provoque la maladie de la pourriture molle. Le 4-PBA, ou un de ses sels, peut aussi être utilisé dans le cas de la bactérie *Erwinia carotovora* subsp. *atroseptica,* également appelée *Pectobacterium atrosepticum*, qui provoque les symptômes de la pourriture molle et de la jambe noire chez la pomme de terre.

Le 4-PBA peut aussi être utilisé pour améliorer la résistance des plantes aux bactéries du genre *Agrobacterium*, notamment l'espèce *A. tumefaciens* qui est responsable d'une maladie appelée galle du collet et qui se traduit par la formation d'une tumeur au site d'infection, et l'espèce *A. vitis* qui est responsable du hairy root, maladie caractérisée par l'apparition d'un chevelu racinaire au point d'infection.

Le 4-PBA peut également être utilisé pour améliorer la résistance des plantes aux virus pathogènes de la famille des Bigeminivirus, Monogeminivirus, Hybrigeminivirus, Ipomovirus, Macluravirus, Nanavirus, Ourmiavirus, Satellite ARN, Satellivirus et Varicosavirus. Des exemples de tels phytovirus incluent, les virus phytopathogènes des genres *Alfamovirus, Begomovirus, Benyvirus, Caulimovirus, Carlavirus, Comovirus, Crinivirus, Cucumovirus, Curtovirus, Ilarvirus, Nucleorhabodovirus, Nepovirus, Poleroverus, Pomovirus, Potexvirus, Potyvirus, Sobemovirus, Tymovirus, Trichovirus, Tobamovirus, Tobravirus,* et *Tospovirus.*

D'autres virus pathogènes incluent le virus A de la pomme de terre, le virus andin latent de la pomme de terre, le virus de l'enroulement apical de la betterave, le virus de l'enroulement de la pomme de terre, le virus de l'enroulement de la vigne, le virus de l'enroulement foliaire apical des Solanums, le virus de la fasciation de la pomme de terre, le virus de la jaunisse nanisante de la pomme de terre, le virus de la maladie bronzée de la tomate, le virus de la marbrure de la pomme de terre des Andes, le virus de la mosaïque aucuba de la pomme de terre, le virus de la mosaïque de la luzerne, le virus de la mosaïque de la pomme de terre sauvage, le virus de la mosaïque de la tomate, le virus de la mosaïque du chou-fleur, le virus de la mosaïque du chénopode, le virus de la mosaïque du concombre, le virus de la mosaïque du maïs, le virus de la mosaïque du tabac, le virus de la mosaïque jaune de la pomme de terre, le virus des feuilles jaunes en cuillère de la tomate, le virus des nervures jaunes de la pomme de terre, le virus du jaunissement de la pomme de terre, le virus M de la pomme de terre, le virus de la mosaïque du châtaignier, le virus S de la pomme de terre, le virus T de la pomme de terre, le virus U de la pomme de terre, le virus V de la pomme de terre, le virus X de la pomme de terre, et le virus Y de la pomme de terre.

Le 4-PBA peut aussi être utilisé pour améliorer la résistance des plantes aux nématodes pathogènes. Des exemples de tels nématodes incluent, les nématodes phytopathogènes des genres *Aphelenchoides, Achlysiella, Anguina, Aulosphora, Bursaphelenchus, Ditylenchus, Discocriconemella, Globofera, Heterodera, Helicotylenchus, Hirschmanniella, Longidorus, Meloidogyne, Nacobbus, Paratrichodorus, Pratylenchus, Radopholus, Rotylenchulus, Trichodorus, Tylenchorhynchus, Scutellonema* et *Xiphinema.*

Ainsi les maladies de plantes qu'il est possible de prévenir incluent toute maladie causée par un agent phytopathogène tel que ceux mentionnés ci-dessus.

### Plantes

La méthode décrite ici peut être appliquée à une large variété de plantes, y compris les plantes de grandes cultures, les plantes potagères, les fleurs et les arbres.

En particulier, la méthode peut être appliquée à des plantes dicotylédones, telles que notamment les Malvacées (ex. cotonnier, etc...), les Solanacées (ex. tabac, tomate, pomme de terre, aubergines, etc...), les Cucurbitacées (ex. melon, concombre, pastèque, courges, etc...), les Crucifères ou Brassicacées (ex. colza, moutarde, etc...), les Composées (ex. chicorée, etc...), les Ombellifères (ex. carotte, cumin, etc...), ou les Rosacées (en particulier arbres et arbustes dont les fruits ont une importance économique), ou des monocotylédones, telles que par exemple notamment les Céréales (ex. blé, orge, avoine, riz, maïs, etc...) ou les Liliacées (ex. oignon, ail, etc...).

Préférablement, le 4-PBA est appliqué sur une plante appartenant à la famille des Malvacées (ex. cotonnier, cacao, okra, etc...), à la famille des Solanacées (ex. tabac, tomate, pomme de terre, aubergines, etc...), à la famille des Rubiacées (ex. café, etc...), à la famille des Poacées ou Graminées (ex. riz, maïs, blé, orge, avoine, seigle, mil, canne à sucre, etc...) ou à la famille des Vitacées (ex. vigne, etc...).

Le 4-PBA peut être appliqué à une plante transgénique. On entend par "plante transgénique" une plante ayant été obtenue par des techniques de manipulation génétique. Plus spécifiquement, une plante transgénique est une plante dont au moins une cellule contient des séquences nucléotidiques exogènes introduites par l'intermédiaire d'une intervention humaine. Typiquement, les plantes transgéniques expriment des séquences ADN qui confèrent à ces plantes un ou plusieurs caractères différents de ceux de plantes non-transgéniques de la même espèce.

### III - Utilisation de l'Acide 4-Phénylbutyrique comme Agent Antimicrobien

Les présents inventeurs ont mis en évidence un effet antibactérien du 4-PBA sur certaines bactéries phytopathogènes. Par "antibactérien", on entend désigner ici une substance qui tue (effet bactéricide) et/ou qui ralentit (effet bactériostatique) la croissance et/ou la multiplication des bactéries.

En conséquence, est décrite ici l'utilisation de 4-PBA, ou de l'un de ses sels, comme agent antimicrobien pour la prévention et/ou le traitement de maladies de plantes causées par des phytopathogènes. Tel qu'utilisé ici, le terme "antimicrobien" fait référence à une substance qui tue et/ou inhibe la croissance et/ou la multiplication de microorganismes.

Les maladies de plantes qu'il est *a priori* possible de traiter par une méthode décrite ici incluent toute maladie causée par un agent phytopathogène qui est détruit et/ou dont la croissance est inhibée par le 4-PBA ou l'un de ses sels.

En particulier, le 4-PBA, ou un de ses sels, peut être utilisé pour traiter une maladie causée par une bactérie de l'espèce *Xanthomonas campestris,* appartenant notamment aux pathovars *armoraciae, begoniae A, begoniae B, campestris, carotae, corylina, dieffenbachiae, hederae, hyacinthi, juglandis, malvacearum, musacearum, nigromaculans, pelargonii, phaseoli, poinsettiicola, raphani, sesami, tardicrescens, translucens* ou *vesicatoria.*

Du fait de ses propriétés antimicrobiennes, le 4-PBA, ou un de ses sels, peut trouver application dans de nombreux domaines où l'absence de contamination microbienne, en particulier bactérienne et/ou virale, est recherchée. Ainsi, par exemple, le 4-PBA, ou l'un de ses sels, peut trouver application dans le domaine des produits d'entretien et d'hygiène en tant qu'agent désinfectant. Le terme "désinfectant", tel qu'utilisé ici désigne une substance qui tue et/ou inhibe la croissance et/ou la reproduction de microorganismes sur la surface d'objets inanimés. De tels objets peuvent par exemple être des instruments médicaux ; des sols, des surfaces, des mobiliers ou des dispositifs de laboratoires ou de sites opératoires ; des sols, des surfaces, des mobiliers ou des dispositifs chez des particuliers ou dans des installations publiques ou industrielles.

Est également décrite ici l'utilisation de 4-PBA, ou de l'un de ses sels, comme agent désinfectant, par exemple dans une méthode de nettoyage, de décontamination ou de désinfection d'une surface d'un objet comprenant une étape de mise en contact de la surface de l'objet avec une quantité efficace de 4-PBA, ou de l'un de ses sels. Le 4-PBA, ou l'un de ses sels, peut être inclus dans une composition ou un produit de nettoyage, ou peut imprégner un tampon ou une lingette destinée au nettoyage, à la décontamination et/ou à la désinfection.

### IV - Méthodes d'Utilisation de l'Acide 4-Phénylbutyrique

Des méthodes ou procédés d'utilisation du 4-PBA ou de l'un de ses sels sont également fournis ici, dans lesquels les agents phytopathogènes, les plantes, et les maladies de plantes sont comme décrits ci-dessus.

Est ainsi décrite ici une méthode d'amélioration de la résistance d'une plante à un agent pathogène, caractérisée en ce qu'elle comprend l'application de 4-PBA, ou d'un de ses sels, aux plantes et/ou aux sols environnant les plantes.

En particulier, le 4-PBA, ou l'un de ses sels, peut être appliqué en une quantité suffisance (ou efficace) pour inhiber la mort cellulaire hypersensible induite par le phytopathogène.

Le 4-PBA, ou l'un de ses sels, peut également être appliqué en une quantité suffisance (ou efficace) pour prévenir une maladie végétale causée par le phytopathogène.

Une méthode de destruction d'un phytopathogène et/ou d'inhibition de la croissance dudit phytopathogène pour la prévention ou le traitement d'une maladie de plantes causée par le phytopathogène est également décrite ici, la méthode comprenant l'application, à la plante ou au sol environnant la plante, d'une quantité suffisante (ou efficace) d'acide 4-PBA. Le phytopathogène peut être choisi parmi les bactéries, les virus et nématodes.

### Application de 4-PBA aux Plantes

Dans la mise en œuvre la méthode décrite ici, l'application de 4-PBA, ou d'un de ses sels, peut être réalisée par n'importe quelle méthode connue dans l'art. Par exemple, l'application peut se faire par traitement du sol ou au sol (par arrosage, injection ou pulvérisation) ; par traitement des substrats de culture (terreau, compost...) ; par traitement par solutions nutritives ou irrigation (système de goutte à goutte ou par aspersion) ; par traitement des partie aériennes de la plante (par arrosage ou pulvérisation, ou par fumigation dans le cas des cultures sous serre) ; par traitement des semences ou d'autres matériels de propagation (par exemple, par poudrage des tubercules ou des plants ; par trempage des bulbes, des fruits, des boutures ou des plantes ; par douchage des fruits ; ou par traitement des grains stockés.

On entend par "parties aériennes d'une plante", la portion de la plante que l'on nomme communément feuillage, et qui se trouve au dessus du sol. D'une manière générale, la partie aérienne ou feuillage d'une plante comprend les feuilles, les tiges, les fleurs, et les fruits. Le terme "fruit" a ici sa définition utilisée en botanique, et désigne donc l'organe végétal contenant une ou plusieurs graines. Le terme "fruit" englobe donc également les légumes.

En fonction du couple phytopathogène/plante et de l'effet désiré (c'est-à-dire amélioration de la résistance de la plante et/ou effet antimicrobien), l'homme du métier sait déterminer la ou les modes d'application les plus adaptés.

L'homme du métier sait également déterminer la ou les doses optimales de 4-PBA, ou de l'un de ses sels, à appliquer pour obtenir le résultat voulu. D'une façon générale, la dose appliquée correspond à une concentration non toxique pour l'homme et l'environnement. Dans certains modes de réalisation, le 4-PBA, ou l'un de ses sels, est appliqué par pulvérisation aux plantes ou parties de plantes à traiter. Dans ces modes de réalisation, le 4-PBA, ou l'un de ses sels, est de préférence appliqué en une dose allant de 0,0005 à 3 kg/ha, plus préférablement allant de 0,001 à 2 kg/ha, et plus préférablement encore de 0,005 à 1 kg/ha.

Le 4-PBA, ou l'un de ses sels, peut être appliqué pré-émergence et/ou post-émergence de la plante. Les termes "pré-émergence de la plante" et "pré-levée de la plante" sont utilisés ici indifféremment et désignent la période après semis avant que la plante cultivée ne sorte de terre. Les termes "post-émergence de la plante" et "post-levée de la plante" sont utilisés ici indifféremment et désigne la période où la plante cultivée est sortie de terre.

Alternativement ou additionnellement, le 4-PBA, ou l'un de ses sels, peut être appliqué après récolte de la plante ou de ses fruits, pour améliorer la stabilité au stockage de la plante ou des fruits.

A moins qu'ils ne soient définis d'une autre manière, tous les termes techniques et scientifiques utilisés dans la description ont la même signification que celle couramment comprise par un spécialiste ordinaire du domaine auquel appartient cette invention.

### Exemples

Les exemples suivants décrivent certains modes de réalisation de la présente invention. Cependant, il est entendu que les exemples ne sont présentés qu'à titre illustratif seulement et ne limitent en aucun cas la portée de l'invention.

### Exemple 1: Effet Inhibiteur du 4-PBA sur la Mort Cellulaire Hypersensible

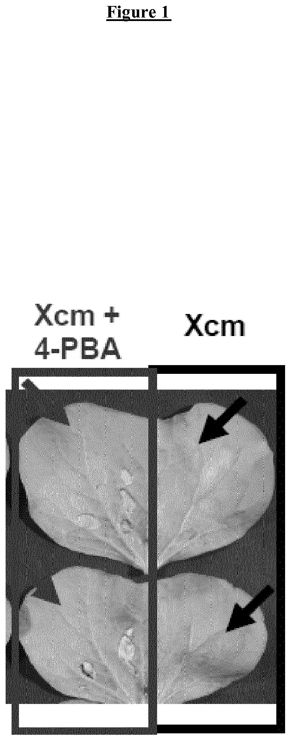

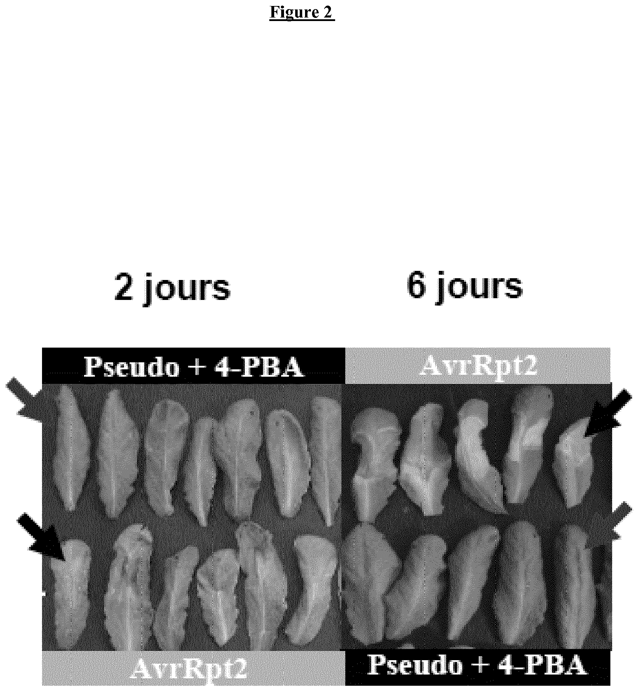

L'effet du 4-PBA sur la mort cellulaire de nature hypersensible a été testé sur plusieurs pathosystèmes dont ceux présentés Figures 1 & 2, à savoir *Gossypium hirsutum*/*Xanthomonas campestris* pv. *malvacearum* et *Arabidopsis thaliana*/*Pseudomonas syringae.* pv. *tomato*, respectivement. D'autres données, bien que non présentées, confirment les propriétés anti-mort cellulaire du 4-PBA lorsque ce dernier est appliqué à des tissus végétaux. Ces dernières données concernent la mort cellulaire hypersensible induite chez le tabac par un éliciteur d'origine fongique, la cryptogéine, et la mort cellulaire hypersensible de type non hôte chez le tabac interagissant avec la bactérie *Pseudomonas syringae* pv. *tomato.*

### Matériels et Méthodes

Une solution mère de 4-PBA (10 mM) a été préparée extemporanément par dissolution de poudre dans de l'eau distillée stérile. Pour permettre la dissolution complète du 4-PBA, la solution a été chauffée à 50°C pendant 10 minutes.

Les bactéries *Xanthomonas campestris* pv. *malvacearum* (*Xcm*, race 18) ont été cultivées overnight en milieu nutritif riche (King B). Après sédimentation par centrifugation, ces dernières ont été lavées avec de l'eau distillée stérile avant d'être resuspendue à une concentration de 10⁸ cfu/mL. La resuspension des cellules s'est fait soit dans de l'eau distillée stérile, soit dans une solution de 4-PBA à 2 mM. Ces deux types de suspensions ont été infiltrés dans des cotylédons de cotonnier (*Gossypium hirsutum*) de chaque côté de la nervure centrale pour comparaison. Les symptômes macroscopiques observés 4 jours après inoculation sont présentés Figure 1. Cette expérience a été répétée 2 fois avec des résultats comparables.

Les bactéries (*Pst,* souche avirulente DC3000 ::AvrRpt2) ont été cultivées overnight en milieu nutritif riche (King B). Après sédimentation par centrifugation, ces dernières ont été lavées avec de l'eau distillée stérile avant d'être resuspendues à une concentration de 10⁷ cfu/mL. La resuspension des cellules s'est faite soit dans de l'eau distillée stérile, soit dans une solution de 4-PBA à 1 mM. Ces suspensions ont ensuite été infiltrées dans les feuilles de la rosette d'*Arabidopsis thaliana.* Les symptômes macroscopiques ont été suivis sur une période de 6 jours post inoculation. Cette expérience a été répétée 2 fois avec des résultats comparables.

### Résultats

Les résultats concernant la mort cellulaire induite par la bactérie *Xcm* (souche avirulente race 18) sur les cotylédons de cotonnier sont présentés sur la Figure 1. Ils montrent clairement que le 4-PBA réprime fortement les symptômes hypersensibles (flèches sur la partie gauche de la Figure 1) normalement induits par l'infiltration de la bactérie dans des feuilles cotylédonnaires de cotonnier (flèches sur la partie droite de la Figure 1).

Les résultats concernant la mort cellulaire induite par la bactérie *Pseudomonas* sur les feuilles d*'Arabidopsis thaliana* sont présentés sur la Figure 2. Ils montrent que le 4-PBA est également capable d'abolir les symptômes hypersensibles normalement induits par l'infiltration de la bactérie dans des feuilles d'*A. thaliana.*

### Exemple 2: Effets de 4-PBA sur le Réticulum Endoplasmique Végétal

L'effet du 4-PBA sur le réticulum endoplasmique des cellules végétales a été testé sur deux types de plantes : l'arabette des Dames (*Arabidopsis thaliana*) et le tabac (*Nicotiana tabacum*)*.*

### Matériels et Méthodes

Les solutions de 4-PBA utilisées dans les expériences décrites ci-après ont été préparées comme décrit dans l'Exemple 1.

L'infection par *Pst* (souche avirulenbte DC3000::AvrRpt2) a été conduite dans les mêmes conditions que celles décrites ci-dessus. Une condition supplémentaire a été ajoutée correspondant à l'infiltration d'une solution de 4-PBA (1 mM) seule dans les feuilles d'*A. thaliana.*

Des échantillons ont été récoltés 44 heures post-inoculation, congelés dans l'azote liquide puis stockés à -80°C jusqu'à extraction des ARN totaux. Les ARN totaux ont été rétro-transcrits pour synthétiser des ADNc. Ces ADNc ont été utilisés comme matrice dans des expériences de PCR quantitative en temps réel. Des amorces spécifiques des gènes codant les « Binding Protein » (BiP1,2 et BiP3), la calnexine 1 (CNX1) et la calreticuline 1 (CRT1) ont été dessinés pour mesurer l'expression de ces gènes. L'expression des gènes d'intérêt a été normalisée par rapport à celle d'un gêne d'actine. Ces expériences on été répétées une fois, incluant un duplicat par expérience.

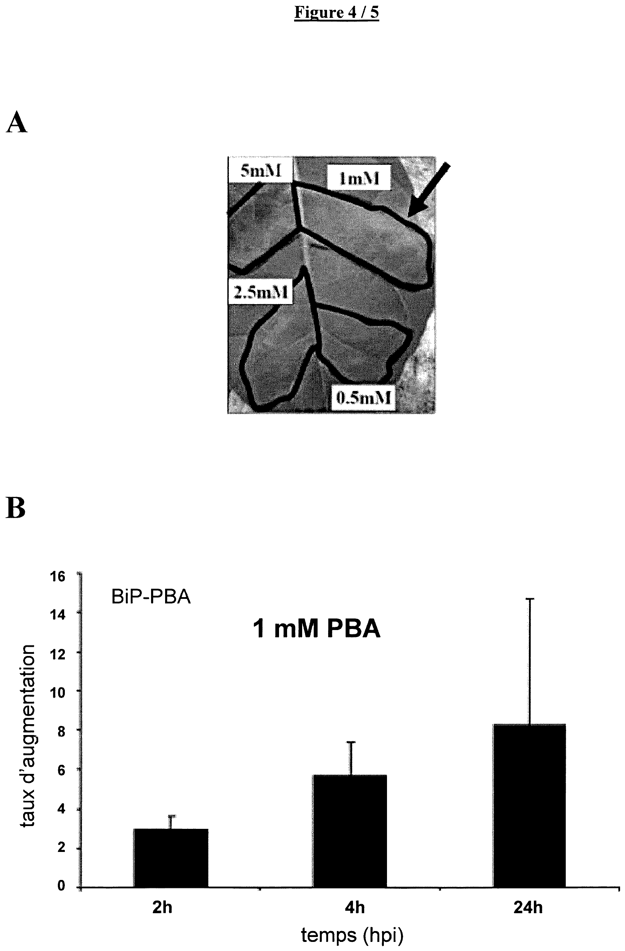

La gamme de concentrations présentée Figure 4A a été réalisée par infiltration dans des feuilles de tabac de solutions de 4-PBA à 0,5 ; 1 ; 2,5 et 5 mM. Les symptômes macroscopiques ont été évalués 48 heures post-infiltration. Des échantillons ont également été récolés au temps indiqués Figure 4B et traités comme décrit ci-avant pour être analysés en PCR quantitative en temps réel. Des amorces spécifiques de l'ensemble des 9 gènes codant des protéines BiP ont été dessinées à cet effet.

### Résultats

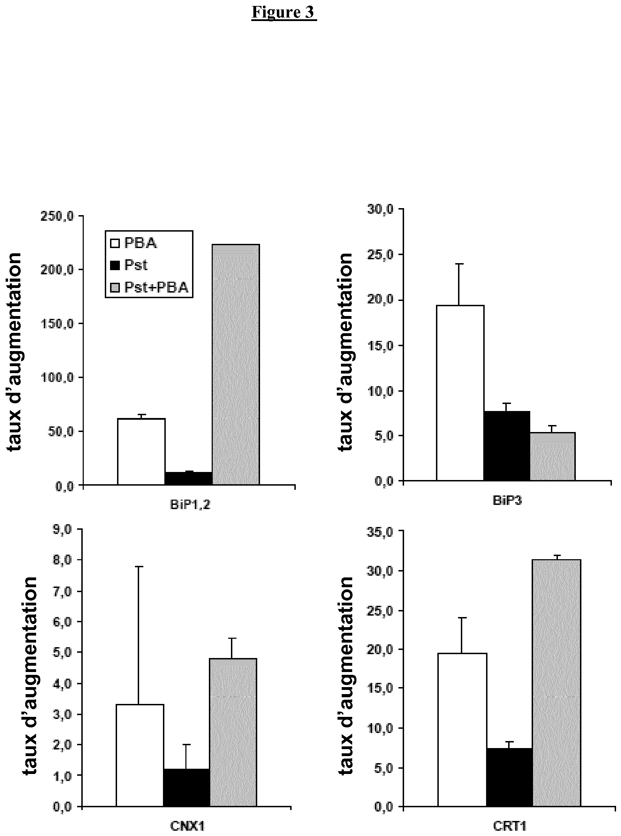

Les résultats obtenus pour *A. thaliana* sont présentés sur la Figure 3. Ils montrent clairement que le 4-PBA, lorsqu'il est infiltré seul dans des feuilles d'arabette, permet d'induire significativement l'expression de gènes codant des protéines chaperonnes (c'est-à-dire BiP1,2 et BiP3, CNX1 et CRT1) localisées au niveau du réticulum endoplasmique. D'autre part, l'infiltration de la bactérie *Pst* seule induit une expression moindre de 4 des gènes considérés, suggérant un stress du réticulum en réponse à l'infection. Enfin, un effet synergique du 4-PBA et de l'infection par la bactérie peut être observé pour les gènes BiP1,2, CNX1 et CRT1. L'ensemble de ces données suggèrent fortement que le 4-PBA abolit la mort cellulaire hypersensible induite par Pst en augmentant la capacité de « folding » du réticulum endoplasmique chez *A. thaliana.*

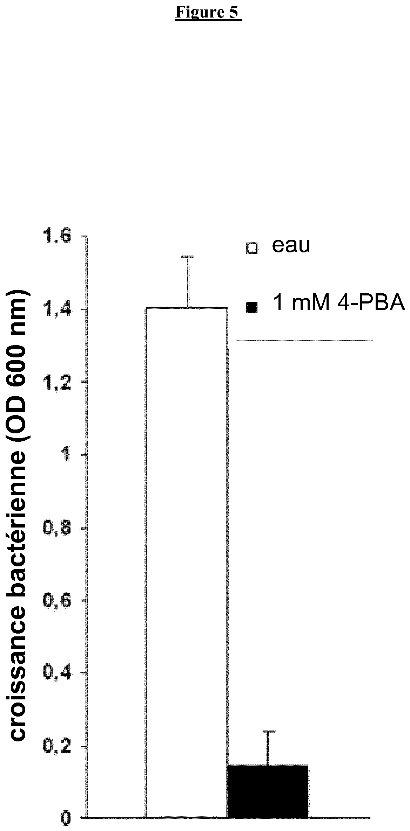

Les résultats obtenus pour le tabac sont présentés sur la Figure 4. Ils démontrent que le 4-PBA aux concentrations utilisées pour inhiber la mort cellulaire hypersensible chez les plantes (Figures 1 et 2) ou la croissance bactérienne (Figure 5) n'est pas toxique pour les cellules végétales (Figure 4A, flèche). Par ailleurs, ces résultats montrent clairement que le 4-PBA, comme c'est le cas chez l'arabette, est capable d'induire l'expression des gènes BiP chez le tabac (Figure 4B), ce qui suggère là encore que le 4-PBA agirait sur la capacité de « folding » du réticulum endoplasmique pour réprimer la mort cellulaire hypersensible induite par la cryptogéine chez le tabac (données non montrées).

### Exemple 3: Propriétés Antibactériennes du 4-PBA

### Matériels et Méthodes

L'effet du 4-PBA sur les bactéries phytopathogènes a été testé *in vitro* sur la souche bactérienne *Xcm* race 20. La souche a été cultivée en milieu liquide King B en présence ou en absence de 4-PBA. La solution de 4-PBA a été préparée extemporanément comme décrit ci-dessus. Le milieu nutritif a été inoculé soit à l'aide de stocks glycérols, soit à l'aide de colonies bactériennes fraîchement cultivées en milieu solide. Le milieu nutritif a ensuite été supplémenté avec la solution de 4-PBA afin d'atteindre une concentration finale de 1 mM (volume final de 10 mL). Les témoins ont été supplémentés avec un volume d'eau comparable. Les tubes ont ensuite été incubés overnight (environ 16 heures) sous agitation douce à 30°C. La croissance bactérienne a ensuite été mesurée par néfélométrie en mesurant l'absorbance d'un aliquot des cultures bactériennes à 600 nm. Cette expérience a été réalisée trois fois. Chaque expérience contenait un triplicat technique par condition, c'est-à-dire condition avec 4-PBA et condition sans 4-PBA. Toutes les expériences ont donné des résultats comparables. Des données similaires ont été obtenues pour la souche XCm race 18 (données non montrées).

### Résultats

Les résultats obtenus sont présentés sur la Figure 5. Ils montrent clairement que la présence de 4-PBA dans le milieu de culture inhibe fortement la croissance des bactéries *X. campestris* pv. *malvacearum* (race 20). Ces données suggèrent que le 4-PBA possède au minimum des propriétés bactéristatiques, voire bactéricides.

## Revendications

1. Méthode de destruction d'un phytopathogène et/ou d'inhibition de la croissance d'un phytopathogène pour la prévention ou le traitement d'une maladie végétale causée par ledit phytopathogène, comprenant l'application, à la plante ou au sol environnant la plante, d'une quantité suffisante d'acide 4-phénylbutyrique, ou de l'un de ses sels, **caractérisée en ce que** le phytopathogène est choisi parmi les bactéries.

2. Méthode selon la revendication 1, **caractérisée en ce que** le phytopathogène est biotrophe.

3. Méthode selon la revendication 1 ou la revendication 2, **caractérisée en ce que** l'acide 4-phénylbutyrique, ou l'un de ses sels, est appliqué pré-émergence de la plante.

4. Méthode selon la revendication 1 ou la revendication 2, **caractérisée en ce que** l'acide 4-phénylbutyrique, ou l'un de ses sels, est appliqué post-émergence de la plante.

5. Méthode selon la revendication 1 ou la revendication 2, **caractérisée en ce que** l'acide 4-phénylbutyrique, ou l'un de ses sels, est appliqué aux parties aériennes de la plante, aux racines de la plante, aux semences, tubercules ou bulbes de la plante, et/ou aux fruits ou grains de la plante.

6. Méthode selon l'une quelconque des revendications 1 à 5, **caractérisée en ce que** la plante appartient à la famille des Malvacées, à la famille des Solanacées, à la famille des Rubiacées, à la famille des Poacées ou Graminées ou à la famille des Vitacées.

## Patentansprüche

1. Verfahren zur Vernichtung eines Phytopathogens und/oder zur Hemmung des Wachstums eines Phytopathogens zur Prävention oder Behandlung einer durch das Phytopathogen verursachten Pflanzenkrankheit, umfassend das Aufbringen einer ausreichenden Menge an 4-Phenylbuttersäure oder eines ihrer Salze auf die Pflanze oder auf den die Pflanze umgebenden Boden, **dadurch gekennzeichnet, dass** das Phytopathogen aus Bakterien gewählt ist.

2. Verfahren nach Anspruch 1, **dadurch gekennzeichnet, dass** das Phytopathogen biotroph ist.

3. Verfahren nach Anspruch 1 oder Anspruch 2, **dadurch gekennzeichnet, dass** 4-Phenylbuttersäure oder eines ihrer Salze vor der Herausbildung der Pflanze angewendet wird.

4. Verfahren nach Anspruch 1 oder Anspruch 2, **dadurch gekennzeichnet, dass** 4-Phenylbuttersäure oder eines ihrer Salze nach der Herausbildung der Pflanze angewendet wird.

5. Verfahren nach Anspruch 1 oder Anspruch 2, **dadurch gekennzeichnet, dass** 4-Phenylbuttersäure oder eines ihrer Salze auf die oberirdischen Teile der Pflanze, auf die Wurzeln der Pflanze, auf die Samen, Knollen oder Zwiebeln der Pflanze und/oder auf die Früchte oder Körner der Pflanze aufgebracht wird.

6. Verfahren nach einem der Ansprüche 1 bis 5, **dadurch gekennzeichnet, dass** die Pflanze zur Familie der Malvaceae, der Familie der Solanaceae, der Familie der Rubiaceae, der Familie der Poaceae oder Gramineae oder der Familie der Vitaceae gehört.

## Claims

1. Method for destroying a phytopathogen and/or inhibiting the growth of a phytopathogen for preventing or treating plant diseases caused by said phytopathogen, comprising the application, to the plant or to the ground surrounding the plant, of a sufficient quantity of 4-phenylbutyric acid, or of one of the salts thereof, **characterised in that** the phytopathogen is selected from bacteria.

2. Method according to claim 1, **characterised in that** the phytopathogen is biotrophic.

3. Method according to claim 1 or claim 2, **characterised in that** 4-phenylbutyric acid, or one of the salts thereof, is applied pre-emergence of the plant.

4. Method according to claim 1 or claim 2, **characterised in that** 4-phenylbutyric acid, or one of the salts thereof, is applied post-emergence of the plant.

5. Method according to claim 1 or claim 2, **characterised in that** 4-phenylbutyric acid, or one of the salts thereof, is applied to the aerial parts of the plant, to the roots of the plant, to the seeds, tubers or bulbs of the plant, and/or to the fruits or grains of the plant.

6. Method according to any one of claims 1 to 5, **characterised in that** the plant belongs to the Malvaceae family, to the Solanaceae family, to the Rubiaceae family, to the Poaceae or Gramineae family or to the Vitaceae family.
